# EUROPÄISCHE PATENTANMELDUNG

(11) **EP 0 769 246 A1**
(43) Veröffentlichungstag der Anmeldung: **23.04.1997**
(21) Anmeldenummer: 95927101.6
(22) Anmeldetag: 17.05.1995
(51) Int. Cl.: A21D 13/00, A21D 13/08

(54) **VERFAHREN FÜR DIE HERSTELLUNG KULINARISCHER ARTIKEL AUF MEHLBASIS UNTER VERWENDUNG GEFRORENER ZWISCHENPRODUKTE**

(30) Priorität: 27.04.1995 RU 95106429
(71) Anmelder: Pivovarov, Vladimir Ivanovich, Moscow, 123298 (RU); Kharchuk, Galina Mikhailovna, Moscow, 109432 (RU); Rybalov, Efim Grigorievich, Moscow, 127018 (RU); Usov, Vitaly Viktorovich, Moscow 117133 (RU)
(72) Erfinder: Pivovarov, Vladimir Ivanovich, Moscow, 123298 (RU); Kharchuk, Galina Mikhailovna, Moscow, 109432 (RU); Rybalov, Efim Grigorievich, Moscow, 127018 (RU); Usov, Vitaly Viktorovich, Moscow 117133 (RU)
(74) Vertreter: Blumenröhr, Dietrich
(86) Internationale Anmeldenummer: RU9500096
(87) Internationale Veröffentlichungsnummer: WO9633616

(57) **Zusammenfassung**

Das Verfahren zur Herstellung von kulinarischen Teigwaren aus schnellgefrorenen Halbfabrikaten umfaßt das Kneten von Hefeteig, der mindesten 5% Fette und zumindest 8% Zucker (von der Mehlmasse) enthält, das Halten des fertig gekneteten Teiges zwecks dessen Fermentation während 40 bis 70 Minuten bei einer Temperatur von 35 bis 45°C, das nachfolgende Formen der Halbfabrikate, deren Gefrieren und Lagern bei einer Temperatur unter minus 1°C. Vor dem Ausbacken von kulinarischen Teigwaren werden die gefrorenen Halbfabrikate derselben auf eine Temperatur in ihrer Mitte gleich 0 - minus 1°C aufgetaut, wonach sie ausgebacken werden.

## Beschreibung

### Technisches Gebiet

Die Erfindung bezieht sich auf die Lebensmittelindustrie und betrifft insbesondere die Backwaren produktion, kontreter besieht sie sich auf ein Verfahren zur Herstellung von kulinarischen Teigwaren aus schnellgefrorenen Halbfabrikaten.

### Zugrundeliegender Stand der Technik

Es ist ein Verfahren zur Produktion von schnellgefrorenen Halbfabrikaten-von gefüllten kleinen Pasteten bekannt, das das Kneten von Teig durch Bereitung dessen fester und flüssiger Phase mit nachfolgedem Vermischen der bereiteten Phasen wahrend 30 Minuten bel der Temperatur 20°C einschließt. In der Stufe der Bereitung der festen Teigphase werden Margarine, pflanzliches Öl, die in einer Menge von 3 bis 6% der Masse der festen Phase genommen sind, und Weizenmehl vermischt. Bei der Bereitung der flüssigen Phase wird eine Mischung von in Milch verdünnter Hefe, Eimelange, Zucker und Salz bei einer Temperatur von 14 bis 15°C wahrend 4 bis 8 Minuten bis zu einer g]elchmäßigen Dispergierung von Luftblaschen im gesamten Volumen der Phase geschlagen. Das genannte Verfahren umfaßt auch die Zubereitung einer Füllung für kleine Pasteten, die Formung der kleinen Pasteten und deren Gefrieren auf die Temperatur minus 9°C wahrend 45 Minuten bis zu 3 Stunden (SU, 1644870, A1).

Das besagte Verfahren stellt eine Stabilisierung der rheologischen Eigenschaften des Hefeteiges sicher und erlaubt es, nach dem Ausbacken kulinarische Teigwaren hinreichend hoher Qualität zu erhalten. Mit dem bekannten Verfahren ist es jedoch unmöglich, die erhaltenen gefrorenen Halbfabrikate eine lange Zeit aufzubewahren, da es im Laufe der Zeit zu Änderungen der Hauptkennziffern der Fettkomponenten des Teiges - der Peroxid-, der Säure- und der Jodzahl, d.h. zum Ranzigwerden des Fettes, kommen kann. Außerdem gewährleistet die bekannte Technologie der Teigknetung nicht In vollem Maße die Bedingungen für den Verlauf des Prozesses der Gärung und der Lebenstätigkeit von Mikroorganismen bei der Teigreife, was sich auf der Porosität und den Strukturell-mechanischen Eigenschaften der Teigkomponente des herzustellenden kulinarischen Erzeugnisses auswirkt.

Bekannt ist auch ein Verfahren zur Produktion von Backwaren, das das Kneten von Teig aus Mehl, Hefe, Zusätzen oxydierender Wirkung, Zucker, Fett und einer Emulsion, gewonnen bei der Vermischung von Eipulver, Trockenmolke, Phosphatid-Konzentrat, Pflanzenöl und Wasser, einschließt. Das genannte Verfahren umfaßt weiterhin die Formierung aus dem gekneteten Teig von kulinarischen Rohstücken, deren Gefrieren und Lagern bei niedrigen Temperaturen sowie bei Bedarf das Auftauen der kulinarischen Rohstücke, die Gare und das Ausbacken (SU, 1750568, A1).

Das besagte Verfahren gewährleistet ganz gute strukturell-mechanische Eigenschaften der Teigkomponente des hergestellten kulinarischen Erzeugnisses, jedoch werden die genannten ausreichend hohen Charakteristiken durch Anwendung einer sehr langwierigen Technologie der Teigknetung erreicht, denn mit dem Zweck, die Eigenschaften der Hefe in der Periode der Tieftemperaturlagerung der kulinarischen Rohstücke aufrechterhalten zu können, wird die Hefe vor dem Einsatz während 4 bis 6 Stunden auf einem verzuckerten stärkehaltigen Substrat bei Belüftung gehalten.

Es sind auch Verfahren zur Herstellung von gefrorenen Teigrohstücken für Backwaren bekannt, einschließend das Kneten von Hefeteig aus Mehl, Hefe, Wasser, Zucker, einem Zusatz - Sojaöl mit äthoxylierten Monoglyzeriden und Mono- und Diglyzeriden, Milch sowie beispielsweise Natriumkaseinat, Natrium-Stearoyl-2-Laktylat, Eiweißfeststoffen, Karboxymethylzellulose, Kaliumbromat, Klebemitteln; das Halten des hergestellten Teiges während 5 bis 90 Minuten bei einer Temperatur von 20 bis 30°C zu dessen Fermentation; Das Formen von Teigrohstücken, die Gare von Teigrohstücken 1 Stunde lang zur im Verlauf der Fermentation erfolgenden Bildung von zusätzlichem Kohlendioxidgas als Resultat der Lebenstätigkeit von Mikroorganismen; das Gefrieren auf eine Temperatur von minus 1 bis minus 25°C während 1,5 bis 4 Stunden; bei Bedarf das nachfolgende Ausbacken von Backwaren aus gefrorenen Rohstücken (US, 4450177, EP, 0115108, B1).

Die vorstehend genannten Verfahren gewährleisten die Erzielung befriedigender rheologischer Eigenschaften des Teiges und der Erzeugnisse aus diesem dank der Verwendung einer großen Anzahl von chemischen Stoffen, welche den Vorgang der Gärung und der Lebenstätigkeit der Mikroorganismen des Hefeteiges unter den Bedingungen niedriger Temperaturen unterhalten und intensivieren. Jedoch sind viele von den verwendeten chemischen Stoffen unerwünscht für die Benutzung, da sie die Gesundheit des Menschen negativ beeinflussen. Überdies ist die Technologie der Erzeugung von Teigrohstücken, gedacht für die Herstellung von Backwaren und nicht von mit Butter und Milch zubereiteten Erzeugnissen, zeitlich sehr ausgedehnt - der Prozeß der Fermentation des fertig gekneteten Teiges nimmt etwa 3 Stunden in Anspruch, während der Gefriervorgang hauptsächlich bei der Temperatur minus 18°C während 4 Stunden durchgeführt wird, um ein vollständiges Gefrieren der Teigrohstücke zu erreichen und die Gärungsaktivität des Teiges minimal zu senken.

### Offenbarung der Erfindung

Der angemeldeten Erfindung liegt die Aufgabe zugrunde, durch Änderung der Bedingungen der Vorbereitung des Teiges für kulinarische Halpfabrikate ein Verfahren zu schaffen, das die Herstellung von kulinarischen Teigwaren mit stabilen rheologischen Charakteristiken des Teiges innerhalb einer kürzeren Zeit seiner Vorbereitung und Reife sicherstellt.

Diese Aufgabe wird mit einem Verfahren zur Herstellung von kulinarischen Teigwaren aus schnellgefrorenen Halbfabrikaten gelöst, das das Kneten von Hefeteig, das Halten des fertig gekneteten Teiges zu dessen Fermentation, das nachfolgende Formen von Halbfabrikaten und deren Gefrieren, das Lagern der schnellgefrorenen Halbfabrikate bei einer Temperatur unter minus 18°C, das Ausbacken von kulinarischen Erzeugnissen aus den schnellgefrorenen Halbfabrikaten umfaßt, bei welchem Verfahren erfindungsgemäß ein Hefeteig geknetet wird, der mindestens 5% Fette und zumindest 8% Zucker (von der Mehlmasse) enthält, der fertig geknetete Teig während 40 bis 70 Minuten auf einer Temperatur von 35 bis 45°C gehalten wird, wobei vor dem Ausbacken der kulinarischen Erzeugnisse die gefrorenen Halbfabrikate auf eine Temperatur in ihrer Mitte gleich 0 bis minus 1°C aufgetaut werden.

Dank der angemeldeten Erfindung ist es möglich geworden, schnellgefrorene Halbfabrikate zu erhalten, welche die Herstellung von kulinarischen Teigwaren mit stabilen rheologischen Charakteristiken des Teiges gewährleisten, was die Verbesserung der Qualität von Erzeugnissen sowohl von der Schmackhaftigkeit als auch vom Aussehen her beeinflußt, wobei der technologische Herstellungszyklus der schnellgefrorenen Halbfabrikate auf etwa 2,5 Stunden reduziert ist.

Nach der Erfindung ist es zweckmäßig, das Gefrieren von Halbfabrikaten bei der Temperatur minus 35°C vorzunehmen, wodurch die Zeit dieser Stufe des technologischen Zyklus auf 1 Stunde verkürzt werden kann.

Erfindungsgemäß wird der Hefeteig zweckmäßigerweise aus folgenden Komponenten geknetet, die in folgender Menge in Masseteilen genommen sind:

| | |
|---|---|
| Weizenmehl | 550 bis 600 |
| Kuh-Vollmilch | 150 bis 200 |
| Backhefe | 40 bis 50 |
| Zucker | 50 bis 80 |
| Kochsalz | 10 |
| Speisefette | 50 bis 100 |
| Eier | 50 bis 100. |

Zusatz, der die Fermentation des Teiges begünstigt, Sojamehl und Saccharose einschließt und in einer Menge von 1% der Weizenmehlmasse genommen ist.

Dank der Verwendung der genannten Zusammensetzung ist die Herstellung eines Hefe-Butterteiges möglich, der für das Backen eines mannigfaltigen Sortiments von kulinarischen Teigwaren in Form von Pasteten mit offener Füllung, länglichen Pasteten mit Fleisch-, Fisch-, Reis- oder Kohlfüllung, Quarkkuchen, kleinen Pasteten, Fladen, Piroggen und Kuchen, Rouladen, Hörnchen, Brötchen, Berliner Pfannkuchen geeignet ist, und dabei aus schnellgefrorenen Halbfabrikaten, die vor 3 bis 4 Wochen zubereitet wurden und ihre ursprünglichen organoleptischen Eigenschaften beibehalten.

Andere Ziele und Vorteile der angemeldeten Erfindung ergeben sich aus der nachfolgenden eingehenden Beschreibung eines Verfahrens zur Herstellung von kulinarischen Teigwaren aus schnellgefrorenen Halbfabrikaten und aus konkreten Ausführungsbeispielen dieses Verfahrens.

### Beste Ausführungsform der Erfindung

Das angemeldete Verfahren zur Herstellung von kulinarischen Teigwaren aus schnellgefrorenen Halbfabrikaten schließt das Kneten eines Hefe-Butterteiges, das heißt eines Teiges, ein, dessen Gehalt an Speisefetten mindestens 5% und an Zucker zumindest 8% (bezogen auf die Mehlmasse) beträgt.

Zweckmäßigerweise werden bei der Teigknetung folgende Komponenten verwendet, die in folgender Menge genommen sind:

| | |
|---|---|
| Back-Weizenmehl | 550 bis 600 |
| Kuh-Vollmilch | 150 bis 200 |
| Backhefe | 40 bis 50 |
| Zucker | 50 bis 80 |
| Kochsalz | 10 |
| Speisefette, z.B. Pflanzenöl, Kuhbutter, Margarine | 50 bis 100 |
| Eier (Eimelange oder Eipulver) | 50 bis 100 |
| Zusatz, der die Fermentation des Teiges begünstigt und Sojamehl und Saccharose einschließt | 5,0 bis 6,0. |

Die Teigknetung aus den genannten Komponenten erfolgt hauptsächlich bei der Temperatur 14°C, wonach der Teig einer Gare - dem Halten des fertig gekneteten Butterteiges zwecks dessen Fermentation - während 40 bis 70 Minuten bei einer Temperatur gleich 35 bis 45°C unterworfen wird. Während des Haltens, das unter beanspruchten Zeit- und Temperaturverhältnissen zustandegebracht wird, gehen am intensivsten die biochemischen und mikrobiologischen Prozesse der Teigreife vonstatten, es erhöht sich das Wasseraufnahmevermögen des Teiges, es läuft optimal das Quellen von Eiweiß- und Kohlenhydratfragmenten des Teiges sowie die Peptisation derselben ab, d.h., es werden alle Voraussetzungen für die Verbesserung der Qualität eines im weiteren ausgebackenen kulinarischen Erzeugnisses (in bezug auf dessen Teiganteil) geschaffen, nämlich eine Erhöhung des Volumens, eine gleichmäßige Porosität, eine Steigerung der Strukturell-mechanischen Eigenschaften des weichen Teils der Mehlkomponente der kulinarischen Erzeugnisse.

Der unter den genannten Bedingungen gehaltene Butterteig wird dann aufgearbeitet: er wird in Rohstücke geteilt, abgerundet, ausgerollt, mit Füllung belegt und geformt, wodurch Halbfabrikate von kulinarischen Teigwaren, nämlich beispielsweise von Pasteten mit offener Füllung, länglichen gefüllten Pasteten, Quarkkuchen, kleinen Pasteten, erhalten werden.

Daraufhin werden die Halbfabrikate von kulinarischen Teigwaren erfindungsgemäß einem Schnellgefrieren unterzogen, das vorwiegend bei der Temperatur minus 35°C höchstens 1 Stunde lang vorgenommen wird. Untersuchungen haben gezeigt, daß die Ausnutzung solch einer niedrigen Temperatur die Gärungsaktivität des Hefe-Butterteiges praktisch nicht beeinflußt, trotzdem die Gärung eines einfachen Hefeteiges bei einer derart niedrigen Temperatur nicht umkehrbar kupiert wird. Das Gefrieren, das bei der Temperatur minus 35°C geschieht, erlaubt es, die Zeit der Erzielung des Gefriereffektes auf 1 Stunde zu verkürzen.

Die gefrorenen Halbfabrikate von kulinarischen Erzeugnissen können bei einer Temperatur unter minus 18°C, vorwiegend aber bei minus 25°C im Laufe von 3 bis 4 Wochen aufbewahrt werden, ohne ein Risiko einzugehen, die Voraussetzungen für eine hohe Qualität des nach Bedarf auszubackenden kulinarischen Erzeugnisses zu zerstören.

Vor dem Backen werden die gefrorenen Halbfabrikate erfindungsgemäß auf eine Temperatur in der Mitte des Erzeugnisses gleich 0 - minus 1°C aufgetaut. Das Auftauen von kulinarischen Erzeugnissen erfolgt bei einer Temperatur von 180 bis 200°C während 15 bis 20 Minuten.

Die erhaltenen kulinarischen Teigwaren weisen stabile rheologische Teigcharakteristiken auf: hohes Volumen, gleichmäßige Porosität, hohe strukturell-mechanische Eigenschaften sowie ein ansprechendes Aussehen und eine hohe Schmacknaftigkeit.

Zum besseren Verständnis der vorliegenden Erfindung werden folgende Beispiele ihrer konkreten Ausführung angeführt:

### Beispiel 1

Aus 550 g Weizenmehl, 165 g Kuh-Vollmilch, 40 g Back-Preßhefe, 90 g Zucker, 10 g Salz, 77 g Eimelange und einem Zusatz auf der Grundlage von Sojamehl und Saccharose, genommen in einer Menge von 4,4 g, wird Teig geknetet, indem man eine Teigknetmaschine mit einer spezifischen Knetarbeit von 11 J/kg einsetzt und die mittlere Temperatur von einzuknetenden Komponenten auf einem Niveau von 14° aufrechterhält. Am Ende des Knetvorgangs werden 90 g erweichte kulinarische Margarine eingeführt. Der eine homogene Konsistenz aufweisende Teig wird einer Gare 1 Stunde lang bei einer Temperatur zwischen 35°C und -5° unterworfen.

Alsdann wird der Teig in Stücke geteilt, gerundet und in Form von Fladen ausgerollt.

Eine vorbereitete Farce - Bulettenfleisch, geschmort unter Zugabe von Wasser (15 bis 20% von der Fleischmasse), vermischt mit vorher passierter Zwiebel, zerkleinert in einem Fleischwolf, gemischt mit Salz, Pfeffer, Gewürzkräutern - wird in die Mitte der Teigfladen gelegt. Es werden kleine Pasteten geformt. Die Halbfabrikate der kleinen Pasteten werden in eine Gefrierkammer eingebracht. Bei der Temperatur minus 35°C und einer Luftbewegungsgeschwindigkeit von 3 bis 5 m/s findet innerhalb einer Stunde ein Tiefgefrieren der Halbfabrikate statt. Die gefrorenen Halbfabrikate werden in eine Verpackung gebracht und bei der Temperatur minus 18°C während 4 Wochen aufbewahrt.

Die Halbfabrikate werden bei 40 bis 50°C innerhalb einer Stunde aufgetaut und in einem Backofen bei einer Temperatur von 180 bis 200°C yum Ausbacken während 15 bis 20 Minuten untergebracht.

Fertige kleine Pasteten haben eine ansprechende üppige Form, die obere Fläche ist glatt, rißfrei, von angenehmer brauner Farbe mit goldgelber Tönung. Das Krüstchen der kleinen Pasteten ist weich, leicht knisternd. Die Schmackhaftigkeit der kleinen Pasteten ist mit der von Pasteten vergleichbar, die dem Gefrieren und der Langzeitlagerung nicht ausgesetzt werden.

### Beispiel 2

Aus 580 g Weizenmehl, 180 g Milch, gebildet bei der Vermischung von Kuh-Trockenmilch mit Wasser, 45 g Back-Preßhefe, 70 g Zucker, 10 g Kochsalz, 66 g Eier und einem Zusatz auf der Grundlage von Sojamehl und Saccharose, genommen in einer Menge von 5,2 g, wird Teig in intensiver Verfahrensweise geknetet. In den hergestellten Teig werden 70 g erweichtes Butter eingeführt. Der Teig wird bis zu einer homogenen Konsistenz durchgeknetet, wonach er während 40 Minuten einer Gare bei der Umgebungstemperatur gleich 45°C unterworfen wird.

Alsdann wird der Teig in Stücke geteilt, gerundet und in Form von Fladen ausgerollt.

Eine vorbereitete Farce, die abgekochte und durchgeriebene Kartoffeln darstellt, gemischt mit pasierter Zwiebel, Pfeffer, Salz, wird in die Mitte eines Teigfladens gelegt und als längliche gefüllte Pasteten geformt. Die Halbfabrikate der länglichen gefüllten Pasteten werden in eine Gefrierkammer eingebracht. Bei der Temperatur minus 36°C und einer Luftbewegungsgeschwindigkeit von 3 bis 5 m/s findet innerhalb einer Stunde ein Tiefgefrieren der Halbfabrikate statt. Die gefrorenen Halbfabrikate der länglichen gefüllten Pasteten werden in eine Verpackung gebracht und bei der Temperatur minus 25°C während 4 Wochen aufbewahrt.

Die Halbfabrikate der länglichen gefüllten Pasteten werden bei 40 bis 50°C innerhalb einer Stunde aufgetaut und in einem Backofen bei einer Temperatur von 180 bis 200°C zum Ausbacken während 15 bis 20 Minuten untergebracht.

Fertige längliche Pasteten haben eine ansprechende üppige Form, die obere Fläche ist glatt, rißfrei, von angenehmer hellbrauner Farbe mit goldgelber Tönung. Das Krüstchen der länglichen gefüllten Pasteten ist weich, leicht knisternd. Die Schmackhaftigkeit der Pasteten ist mit der von Pasteten vergleichbar, die dem Gefrieren und der Langzeitlagerung nicht ausgesetzt werden.

### Beispiel 3

Aus 600 g Weizenmehl, 200 g Kuh-Vollmilch, 50 g Back-Preßhefe, 50 g Zucker, 10 g Salz, 50 g Eier und einem Zusatz auf der Grundlage von Sojamehl und Saccharose, genommen in einer Menge von 6 g, wird Teig in einem intensiven Verfahren der Vermischung der genannten Komponenten geknetet. In den hergestellten Teig werden 60 g Pflanzenöl eingeführt. Der Teig wird bis zu einer homogenen Konsistenz durchgeknetet, wonach dieser einer Gare während 65 Minuten bei der Umgebungstemperatur 40°C unterworfen wird.

Alsdann wird der Teig in Stücke geteilt, gerundet und in Form von Fladen ausgerollt.

Eine Farce, vorbereitet ähnlich wie im Beispiel 1 angegeben, wird in die Mitte der Teigfladen gelegt und als Pasteten mit offener Füllung geformt.

Die Halbfabrikate der Pasteten mit offerer Füllung werden dem Schnellgefrieren, Lagern und Ausbacken unter den Bedingungen unterzogen, die den im Beispiel 1 angegebenen ähnlich sind.

Fertig gebackene Pasteten mit offener Füllung haben ein üppiges Aussehen, eine glatte rißfreie Oberfläche von hellbrauner Farbe mit orange Tönung. Das Krüstchen ist weich, leicht knisiernd. Der Geruch des kulinarischen Fertigerzeugnisses ist angenehm, ohne fremden Anflug von Fettranzigkeit und Muffigkeit. Nach ihren organoleptischen Eigenschaften sind die erhaltenen Pasteten mit offener Füllung mit den Pasteten vergleichbar, die dem Gefrieren und der nachfolgenden Langzeitlagerung nicht ausgesetzt werden.

### Gewerbliche Verwertbarkeit

Das beanspruchte Verfahren wird in Einrichtungen der gesellschaftlichen Speisewirtschaft, die mit Halbfabrikaten hohen Garheitsgrades arbeiten, vom Typ "Bistro", Imbißstuben, Cafes Anwendung finden.

## Patentansprüche

1. Verfahren zur Herstellung von kulinarischen Teigwaren aus schnellgefrorenen Halbfabrikaten, das das Kneten von Hefeteig, das Halten des fertig gekneteten Teiges zu dessen Fermentation, das nachfolgende Formen von Halbfabrikaten und deren Gefrieren, das Lagern der schnellgefrorenen Halbfabrikate bei einer Temperatur unter minus 18°C, das Ausbacken von kulinarischen Erzeugnissen aus den schnellgefrorenen Halbfabrikaten umfaßt, dadurch **gekennzeichnet**, daß ein Hefeteig geknetet wird, der mindestens 5% Fette und zumindest 8% Zucker (von der Mehlmasse) enthält, der fertig geknetete Teig während 40 bis 70 Minuten auf einer Temperatur von 35 bis 45°C gehalten wird, wobei vor dem Ausbacken der kulinarischen Teigwaren die gefrorenen Halbfabrikate auf eine Temperatur in ihrer Mitte gleich 0 - minus 1°C aufgetaut werden.

2. Verfahren nach Anspruch 1, dadurch **gekennzeichnet**, daß das Gefrieren von Halbfabrikaten bei der Temperatur minus 35°C vorgenommen wird.

3. Verfahren nach Anspruch 1, dadurch **gekennzeichnet**, daß der Hefeteig aus folgenden Komponenten geknetet wird, die in folgender Menge in Masseteilen genommen sind:
| | |
|---|---|
| Weizenmehl | 550 bis 600 |
| Kuh-Vollmilch | 150 bis 200 |
| Backhefe | 40 bis 50 |
| Zucker | 50 bis 80 |
| Kochsalz | 10 |
| Speisefette | 50 bis 100 |
| Eier | 50 bis 100. |
Zusatz, der die Fermentation des Teiges begünstigt. Sojamehl und Saccharose einschließt und in einer Menge von 1% der Weizenmehlmasse genommen ist.
